# EUROPÄISCHE PATENTSCHRIFT

(11) **EP 1 243 778 B1**
(45) Veröffentlichungstag und Bekanntmachung des Hinweises auf die Patenterteilung: **30.11.2011**
(21) Anmeldenummer: 02005158.7
(22) Anmeldetag: 08.03.2002
(51) Int. Cl.: F02D 41/14, F02D 33/02, F02D 41/22

(54) **Verfahren zur Funktionsdiagnose mindestens eines Ladungsbewegungselements durch Auswertung der Laufunruhe**
Method for performing functional diagnostics on at least one charge movement element by evaluating running irregularities
Procédé de diagnostic du fonctionnement d'au moins un élément d'agitation de la charge par évaluation des irrégularités de régime

(30) Priorität: 23.03.2001 DE 10114376; 23.03.2001 DE 10114375
(43) Veröffentlichungstag der Anmeldung: 25.09.2002
(73) Patentinhaber: AUDI AG, 85045 Ingolstadt (DE)
(72) Erfinder: Feldmann, Uwe, 86673 Bergheim (DE); Lietz, Olaf, 85055 Ingolstadt (DE)
(74) Vertreter: Thielmann, Frank

(56) Entgegenhaltungen:
- EP-A- 0 922 952
- DE-A1- 4 026 853
- DE-A1- 19 922 568
- PATENT ABSTRACTS OF JAPAN Bd. 015, Nr. 286 (M-1138), 19. Juli 1991 (1991-07-19) & JP 03 100370 A (YAMAHA MOTOR CO LTD), 25. April 1991 (1991-04-25)

## Beschreibung

Die Erfindung betrifft ein Verfahren zur Funktionsdiagnose mindestens eines Ladungsbewegungselements in einem Verbrennungsmotor eines Kraftfahrzeugs und eine Motorsteuervorrichtung, die dazu ausgelegt ist, das erfindungsgemäße Verfahren durchzuführen.

Aus der DE 199 22 568 ist eine Ladungsbewegungsklappe bekannt. Diese Ladungsbewegungsklappe ist in einem Ansaugrohr angeordnet. Sie umfaßt eine Platte, die passend zu einem Querschnitt des Ansaugrohrs geformt ist, wobei etwa ein Viertel der Platte ausgenommen ist, um der Luft einen Durchtritt durch diese Aussparung zu erlauben, wenn sich die Ladungsbewegungsklappe in einer geschlossenen Position befindet. Dieser Durchtritt der Luft bewirkt eine erhöhte Bewegung der Ladung im Zylinder. In der genannten Druckschrift wird die Ladungsbewegungsklappe in Kombination mit einer dual gleichen, variablen Nocken-Synchronisation eingesetzt. Diese Kombination ermöglicht es, einen Verbrennungsmotor entweder unter vollständig oder nahezu stöchiometrischen oder unter mageren Bedingungen zu betreiben, so daß zur Reduzierung der Luftverschmutzung eine Mager-NOx-Falle eingesetzt werden kann. Durch die Ladungsbewegungsklappe wird die Bewegung der Ladung im Zylinder erhöht und damit die Fähigkeit zum Umgang mit einer Ladungsverdünnung verbessert. Dies wird erreicht, indem die Ladungsbewegungsklappe der in den Zylinder eintretenden Ladung selektiv ein Drehmoment mitgibt.

Die Ladungsbewegungsklappe ist abgasbeeinflussend, so daß ein Ausfall bzw. ein Defekt der Ladungsbewegungsklappe zu ungewünschten schädlichen Abgasemissionen führen kann.

Aus der DE 40 26 853 ist eine Vorrichtung bekannt, durch die festgestellt werden kann, ob in Ansaugrohren befindliche Drosselklappen den gewünschten Öffnungswinkel aufweisen. Eine Normalfall-Regeleinheit gibt bestimmte Öffnungssollwerte für die einzelnen Drosselklappen vor. Mit Hilfe von Öffnungswinkelerfassungseinheiten können die tatsächlichen Öffnungsistwerte der einzelnen Drosselklappen ermittelt werden. Diese Istwerte werden dann mit den Sollwerten verglichen. Übersteigt die berechnete Differenz zwischen einem Istwert und einem Sollwert einen bestimmten Wert, liegt eine Fehlfunktion im Regelsystem einer Drosselklappe vor, weil diese Drosselklappe offensichtlich nicht der Vorgabe der Normalfall-Regeleinheit folgt. Zur Regelung der Ansaugluftmenge werden dann von der gegenüber der Normalfall-Regeleinheit vorrangigen Störfall-Regeleinheit nur die störungsfreien Drosselklappen gesteuert. Dieses Regelsystem ist jedoch äußerst aufwendig, da jede Drosselklappe mit einer Öffnungswinkelerfassungseinheit kombiniert werden muss. Außerdem erscheint diese Art der Funktionsüberprüfung für Ladungsbewegungsklappen nicht in allen Fällen geeignet. Zum Beispiel könnte bei einer Ladungsbewegungsklappe eine Störung dadurch auftreten, dass die Aussparung aufgrund von Materialalterung größer ist als vorgesehen. Diese Art der Störung würde durch eine Überprüfung mit Hilfe einer Öffnungswinkelerfassungseinheit nicht festgestellt werden.

Hinzu kommt weiterhin, dass eine Ladungsbewegung auch durch andere Ladungsbewegungselemente erzeugt werden kann als durch Ladungsbewegungsklappen, so dass die Funktionsfähigkeit dieser Ladungsbewegungselemente nicht auf die in der DE 40 26 853 beschriebene Weise überprüft werden kann. Beispielsweise wird in der WO 99/46491 ein Ottomotor offenbart, der mehrere Einlassventile für einen Zylinder besitzt, die durch eine variable Ventilsteuerung eine Ladungsbewegung in dem Zylinder verursachen.

Die DE 195 23 106 C1 beschreibt ein Verfahren zur Funktionsdiagnose einer Abgasrückführeinrichtung. Hierbei wird bei Vorliegen im Wesentlichen konstanter Motorlast und Motordrehzahl die Abgasrückführeinrichtung durch Einstellen einer bestimmten Abgasrückführrate aktiviert. Anschließend wird der Zündzeitpunkt in Richtung einer frühen Zündung verstellt, bis eine vorgegebene, minimale Aktivität einer Klopfregelung erreicht ist. Nun wird die Abgasrückführrate verringert. Wird hierbei ein Erhöhen der Aktivität der Klopfregelung festgestellt, so wird darauf geschlossen, dass die Abgasrückführeinrichtung fehlerfrei ist.

Der vorliegenden Erfindung liegt daher die Aufgabe zugrunde, ein Verfahren zur Funktionsdiagnose mindestens eines Ladungsbewegungselements bereitzustellen, das einfach durchzuführen ist, nicht den Einbau von aufwendigen Prüfungseinheiten voraussetzt und zu zuverlässigen Ergebnissen führt. Der Erfindung liegt außerdem die Aufgabe zugrunde, eine Motorsteuervorrichtung zur Durchführung des Verfahrens bereitzustellen.

Die Aufgabe wird gelöst durch ein Verfahren mit den Merkmalen des Patentanspruchs 1. Das Verfahren zur Funktionsdiagnose mindestens eines Ladungsbewegungselements in einem Verbrennungsmotor eines Kraftfahrzeugs, das bei laufendem Verbrennungsmotor durchgeführt wird umfasst folgende Schritte:
a) Erzeugen einer Ladungsbewegung durch das mindestens eine Ladungsbewegungselement;
b) Einstellen mindestens eines Zündwinkels zum Erzeugen eines daraus resultierenden Laufverhaltens des Verbrennungsmotors;
c) Ermitteln einer für das Laufverhalten des Verbrennungsmotors charakteristischen Größe;
d) Vergleichen der ermittelten Größe mit einem Sollwert, um ein mögliches Abweichen festzustellen.

Bei dem erfindungsgemäßen Verfahren wird bei Übereinstimmen der ermittelten Größe mit dem Sollwert nach Schritt d) zu Schritt b) zurückgeschleift, wobei der mindestens eine Zündwinkel in Richtung "früh" bzw. "spät" auf einen anderen Zündwinkelwert verschoben wird. Dies ist besonders vorteilhaft, weil es vorkommen kann, dass der zuerst eingestellte Zündwinkelwert nicht ausreichend in Richtung "früh" oder "spät" verschoben war.

Im Sinne der Erfindung ist unter Einstellen mindestens eines Zündwinkels in Richtung früh oder "spät" eine Massnahme zu verstehen, bei der ein relativ früher oder später Zündwinkelwert eingestellt wird. Im Sinne der Erfindung ist unter Einstellen mindestens eines Zündwinkels in Richtung "früh" zu verstehen, dass ein früher Zündwinkelwert eingestellt wird, der einem Sollzündwinkel entspricht, wobei der Sollzündwinkel in der Regel im Bereich der Klopfgrenze liegt. Der Erfindung liegt die Erkenntnis zugrunde, dass bei tatsächlich erzeugter Ladungsbewegung und einem Motorbetrieb mit Zündwinkeln, die ohne Ladungsbewegung im wirkungsgradoptimalen Bereich liegen, ein Klopfen auftritt, das ohne erzeugte Ladungsbewegung nicht auftreten würde. Wird eine Ladungsbewegung durch das mindestens eine Ladungsbewegungselement erzeugt und mindestens ein Zündwinkel auf einen oben beschriebenen Zündwinkelwert eingestellt, so signalisiert das Klopfen, dass tatsächlich eine Ladungsbewegung erreicht wurde. Ist hingegen die Klopfaktivität nicht so hoch wie erwartet, liegt eine Störung bei der Erzeugung der Ladungsbewegung vor. Dabei stellt die Klopfaktivität im Sinne der Erfindung ein Maß dafür dar, ob und wie stark ein Klopfen auftritt. Wird beispielsweise kein Klopfen beobachtet, ist die Klopfaktivität gleich null. Ebenso kann umgekehrt eine nicht erzeugte Ladungsbewegung (z.B. offene Ladungsbewegungsklappe) dadurch erkannt werden, das mit dem oben beschriebenen Zündwinkel kein Klopfen auftritt.
Der Erfindung liegt ferner die Erkenntnis zugrunde, dass bei einem Motorbetrieb mit in Richtung "spät" eingestellten Zündwinkeln und ohne erzeugte Ladungsbewegung eine größere Laufunruhe auftritt, als bei erzeugter Ladungsbewegung mit den gleichen späten Zündwinkeleinstellungen. Mit erzeugter Ladungsbewegung ist es nämlich möglich, mit dem Motor wesentlich spätere Zündwinkel zu fahren als ohne erzeugte Ladungsbewegung. Wird eine Ladungsbewegung durch das mindestens eine Ladungsbewegungselement erzeugt und mindestens ein Zündwinkel in Richtung "spät" gestellt, so spät, daß ohne erzeugte Ladungsbewegung die Laufunruhe merklich ansteigen würde, so signalisiert folglich eine geringere Laufunruhe des Motors, daß keine Störung bei der Erzeugung der Ladungsbewegung vorliegt. Wird hingegen eine Laufunruhe beobachtet, die der Laufunruhe ohne Ladungsbewegung bei entsprechenden Zündwinkeln entspricht, kann von defekten Ladungsbewegungselementen, bzw. geringer Ladungsbewegung ausgegangen werden.

Das erfindungsgemäße Verfahren kann ferner auf sehr einfache Art und Weise durchgeführt werden und führt trotzdem zu sehr zuverlässigen Ergebnissen, da die Ladungsbewegung direkt überprüft wird, und nicht eine indirekte Prüfung, beispielsweise über eine Stellung eines Ladungsbewegungselements, stattfindet. Außerdem müssen die Ladungsbewegungselemente nicht extra mit zusätzlichen Überprüfungselementen gekoppelt werden, um das Verfahren durchführen zu können.

Eine erste besonders vorteilhafte Weiterbildung der Erfindung sieht vor, daß die in Schritt c) ermittelte Größe charakteristisch für die Klopfaktivität ist, die durch einen bestimmten Zylinder verursacht wird. Bekannterweise weist ein Motor ein oder mehrere Zylinder auf, wobei in einem Zylinder ein hin und her bewegbarer Kolben angeordnet ist. Herkömmlicherweise ist der Kolben über eine Pleuelstange mit einer Kurbelwelle verbunden. Pro Zylinder können ein oder mehrere Ansaugrohre vorgesehen sein, durch die der Motor mit Luft versorgt wird, wobei die Luft jeweils über ein oder mehrere Einlaßventile in den jeweiligen Zylinder eingelassen wird. In einem solchen Ansaugrohr kann nun beispielsweise ein Ladungsbewegungselement angeordnet sein, so daß das Nichtfunktionieren des Ladungsbewegungselements in dem Ansaugrohr dazu führt, daß durch den Zylinder, mit dem das Ansaugrohr verbunden ist, eine vom Sollwert abweichende Klopfaktivität verursacht wird. Ist wie bei der genannten Weiterbildung die in Schritt c) ermittelte Größe charakteristisch für die Klopfaktivität, die durch einen bestimmten Zylinder verursacht wird, so kann gezielt das mindestens eine Ladungsbewegungselement hinsichtlich seiner Funktionsfähigkeit überprüft werden, das mit dem bestimmten Zylinder in Wirkverbindung steht. Es ist daher äußerst sinnvoll, pro Zylinder eine Größe zu ermitteln, die charakteristisch für die Klopfaktivität ist, die durch diesen Zylinder verursacht wird.

In einer weiteren besonders vorteilhaften Ausgestaltung der Erfindung geht in die in Schritt c) ermittelte charakteristische Größe eine Frequenz und/oder eine Amplitude eines Klopfens in einem bestimmten Winkelfenster der Kurbelwelle ein, wobei das bestimmte Winkelfenster der Kurbelwelle dem bestimmten Zylinder zugeordnet ist. Insbesondere die Amplitude stellt ein geeignetes Maß für die Klopfaktivität dar, die durch einen bestimmten Zylinder verursacht wird.

Eine zweite besonders vorteilhafte Weiterbildung der Erfindung sieht vor, daß die in Schritt c) ermittelte Größe charakteristisch für die Laufunruhe ist, die durch einen bestimmten Zylinder verursacht wird. Bekannterweise weist ein Motor ein oder mehrere Zylinder auf, wobei in einem Zylinder ein hin und her bewegbarer Kolben angeordnet ist. Herkömmlicherweise ist der Kolben über eine Pleuelstange mit einer Kurbelwelle verbunden. Pro Zylinder können ein oder mehrere Ansaugrohre vorgesehen sein, durch die der Motor mit Luft versorgt wird, wobei die Luft jeweils über ein oder mehrere Einlaßventile in den jeweiligen Zylinder eingelassen wird. In einem solchen Ansaugrohr kann nun beispielsweise ein Ladungsbewegungselement angeordnet sein, so daß das Nichtfunktionieren des Ladungsbewegungselements in dem Ansaugrohr dazu führt, daß durch den Zylinder, mit dem das Ansaugrohr verbunden ist, eine vom Sollwert abweichende Laufunruhe verursacht wird. Ist wie bei der genannten Weiterbildung die in Schritt c) ermittelte Größe charakteristisch für die Laufunruhe, die zeitlich einem bestimmten Zylinder zugeordnet wird, so kann gezielt das mindestens eine Ladungsbewegungselement hinsichtlich seiner Funktionsfähigkeit überprüft werden, das mit dem bestimmten Zylinder in Wirkverbindung steht. Es ist daher äußerst sinnvoll, pro Zylinder eine Größe zu ermitteln, die charakteristisch für die Laufunruhe ist, die durch diesen Zylinder verursacht wird.

In einer weiteren besonders vorteilhaften Ausgestaltung der Erfindung entspricht die in Schritt c) ermittelte charakteristische Größe einer Kurbelwellenbeschleunigung in einem bestimmten Winkelfenster der Kurbelwelle, wobei das bestimmte Winkelfenster der Kurbelwelle dem bestimmten Zylinder zugeordnet ist.

Eine weitere Ausgestaltung der Erfindung sieht vor, daß bei Abweichen der ermittelten Größe von dem Sollwert ein Warnsignal erzeugt wird, das darüber informiert, dass mindestens ein Ladungsbewegungselement oder mindestens ein mit dem bestimmten Zylinder in Wirkverbindung stehendes Ladungsbewegungselement nicht funktionsfähig ist. Dabei kann das Warnsignal beispielsweise durch eine entsprechende Anzeige am Armaturenbrett realisiert werden, so dass ein Fahrer oder eine andere Überprüfungsperson unverzüglich über die Störung informiert wird.

Der frühe Zündwinkelwert oder der andere frühe Zündwinkelwert kann ein Basiszündwinkel für den Betrieb ohne Ladungsbewegung sein, also ein wirkungsgradoptimaler Zündwinkel.

Eine weitere Ausgestaltung der Erfindung sieht vor, dass die in Schritt c) für die Klopfaktivität charakteristische Größe die Aktivität einer automatischen Klopfregelung ist. Da das so genannte Klopfen beim Betrieb eines Verbrennungsmotors einen kritischen Betriebszustand darstellt, der die Lebensdauer des Motors ungünstig beeinflussen kann, wird häufig eine so genannte Klopfregelung eingesetzt. Die Klopfregelung verschiebt beim Sensieren des Klopfens eines Zylinders des Verbrennungsmotors den Zündwinkel in Richtung spät. Folglich ist die Aktivität, das heißt der Betriebszustand, einer automatischen Klopfregelung, ein geeignetes Maß für die Klopfaktivität. Ist in einem Fahrzeug bereits eine automatische Klopfregelung vorgesehen, kann darauf verzichtet werden, Elemente zur Verfügung zu stellen, die das Klopfen beispielsweise in der oben beschriebenen Art und Weise auswerten.

Das mindestens eine Ladungsbewegungselement kann mindestens eine Ladungsbewegungsklappe umfassen, und die mindestens eine Ladungsbewegungsklappe kann in Schritt a) in eine angestellte, geschlossene oder in eine nahezu geschlossene Stellung überführt werden. Wesentlich ist, dass durch die jeweilige Stellung eine Ladungsbewegungs- ggf. Drallerzeugung für den in den Brennraum eingelassenen Luftstrom erreicht werden kann.

Das mindestens eine Ladungsbewegungselement kann aber auch mindestens ein Einlaßventil umfassen, das in Schritt a) derart aktiviert wird, daß es die Ladungsbewegung regelmäßig erzeugt. Dies kann beispielsweise durch eine variable Ventilsteuerung geschehen.

Besonders vorteilhaft ist es, wenn das erfindungsgemäße Verfahren automatisch, insbesondere durch eine Motorsteuervorrichtung, durchgeführt wird, so daß das erfindungsgemäße Verfahren auch von einer unerfahrenen oder unkundigen Person initiiert werden kann bzw. vom Motorsteuergerät selbst initiiert wird. Alternativ kann das erfindungsgemäße Verfahren auch manuell durchgeführt werden.

Die obige Aufgabe wird auch gelöst durch eine Motorsteuervorrichtung, die dazu ausgelegt ist, das erfindungsgemäße Verfahren automatisch oder manuell durchzuführen. Dies setzt voraus, daß die Verfahrensschritte in der Motorsteuervorrichtung abgelegt sind, und daß die Motorsteuervorrichtung Elemente umfaßt, durch die die einzelnen Schritte durchgeführt werden können. Vorteilhafterweise können bei der erfindungsgemäßen Motorsteuervorrichtung auch die bereits oben im Zusammenhang mit dem erfindungsgemäßen Verfahren erwähnten Funktionen realisiert sein.

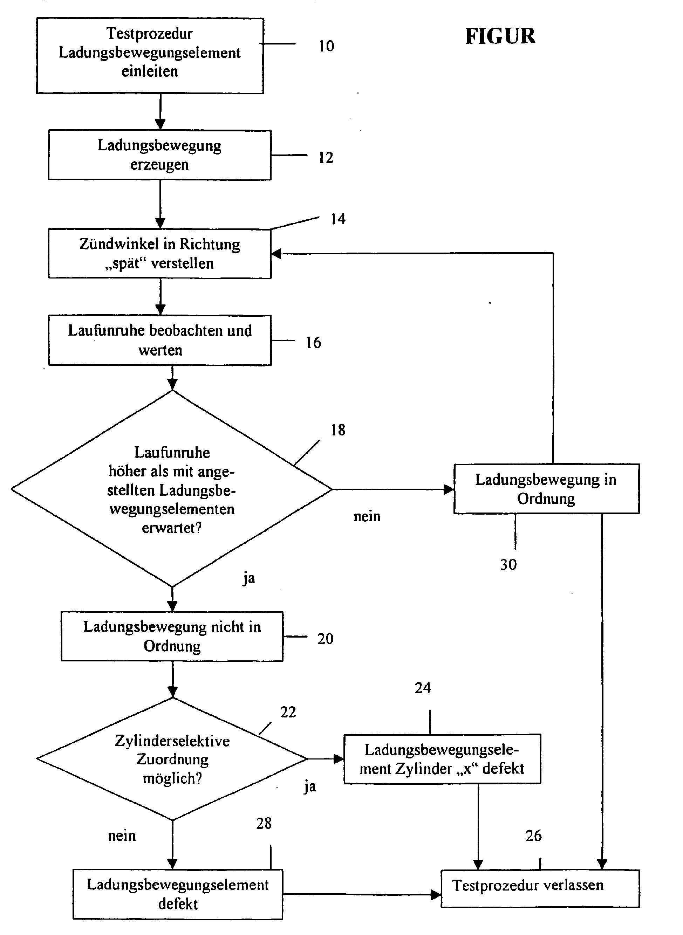

Weitere Vorteile gehen aus den im folgenden unter Hinweis auf die Zeichnung beschriebenen Ausführungsbeispielen hervor.
- Die Figur: zeigt ein erfindungsgemäßes Verfahren zur Funktionsdiagnose mindestens eines Ladungsbewegungselements in einem Verbrennungsmotor.

In der Figur ist ein erfindungsgemäßes Verfahren dargestellt, mit dem die Funktion mindestens eines Ladungsbewegungselements in einem Verbrennungsmotor diagnostiziert werden kann. Beispielhaft wird hier ein Verbrennungsmotor in einem Fahrzeug untersucht, der mehrere Zylinder aufweist, denen jeweils durch ein Ansaugrohr Luft zugeführt wird, wobei beispielsweise in jedem Ansaugrohr ein Ladungsbewegungselement angeordnet ist. In einem ersten Schritt 10 des erfindungsgemäßen Verfahrens wird die Testprozedur eingeleitet, indem beispielsweise ein Betätigungselement betätigt wird, woraufhin ein Befehl zum Starten des Verfahrens erzeugt wird, bzw. der Befehl zum Starten der Testprozedur durch die Motorsteuerung selbsttätig eingeleitet wird. Durch den Befehl wird in einer Ausgestaltung der Erfindung eine Motorsteuervorrichtung dazu veranlaßt, mit der Funktionsdiagnose zu beginnen. Das erfindungsgemäße Verfahren wird bei laufendem Motor durchgeführt.

In einem zweiten Schritt 12 wird dann eine Ladungsbewegung durch die Ladungsbewegungselemente erzeugt. Beispielsweise ist dies durch Ladungsbewegungsklappen möglich. In diesem Fall wird die Ladungsbewegung erzeugt, indem die Ladungsbewegungsklappen geschlossen oder nahezu geschlossen werden. Dies ist abhängig davon, wie die Ladungsbewegungsklappen ausgebildet sind. Diejenigen Ladungsbewegungsklappen, die eine Aussparung zur Drallerzeugung aufweisen, werden vollständig geschlossen, während diejenigen Ladungsbewegungsklappen, die keine derartige Aussparung aufweisen, soweit geschlossen werden, daß durch die noch verbleibende Öffnung ein entsprechender Drall erzeugt wird.

In einem weiteren Schritt 14 werden die Zündwinkel in Richtung früh oder spät verstellt. Daraufhin wird in Schritt 16 die Klopfaktivität bzw. die Laufunruhe ermittelt und bewertet. Die Ermittlung der Klopfaktivität erfolgt duch eine im Fahrzeug vorhandenen Klopfregelung. Diese Aktivität bildet eine charakteristische Größe, die mit einem Sollwert verglichen wird, wobei der Sollwert einer bei erzeugter Ladungsbewegung zu erwartenden Aktivität entspricht. Der zu diesem Zweck erfaßte Laufunruhewert beschreibt prinzipiell die Unterschiede der Kurbelwellenbeschleunigung von aufeinanderfolgenden Arbeitsspielen des Motors. Dieser Laufunruhewert bildet eine charakteristische Größe, die mit einem Sollwert verglichen wird, wobei der Sollwert einem bei erzeugter Ladungsbewegung zu erwartenden Laufunruhewert entspricht. Wird in Schritt 18 festgestellt, daß der die Klopfregelung weniger aktiv ist als mit z.B. angestellten Ladungsbewegungsklappen, also mit erzeugter Ladungsbewegung bzw. der Laufunruhewert betragsmäßig höher ist als mit erzeugter Ladungsbewegung erwartet, kann auf eine mangelnde Funktionsfähigkeit - der Ladungsbewegungselemente geschlossen werden. Wird dies in Schritt 20 festgestellt, setzt in Schritt 22 der Versuch einer zylinderselektiven Zuordnung ein.

In einer Ausgestaltung der Erfindung wird zu diesem Zweck die Klopfregelung inaktiv geschaltet, und pro Zylinder wird aus einer Amplitude eines Klopfens in einem bestimmten Winkelfenster der Kurbelwelle eine charakteristische Größe ermittelt, wobei das bestimmte Winkelfenster der Kurbelwelle dem Zylinder zugeordnet ist. Die charakteristische Größe wird dann jeweils mit einem Sollwert verglichen, der bei erzeugter Ladungsbewegung und dem eingestellten Zündwinkelwert erwartet wird. Auf diese Art und Weise kann festgestellt werden, ob die Klopfaktivität, die durch einen Zylinder verursacht wird, geringer ist als erwartet. Ist dies der Fall, ist die Ladungsbewegung in diesem Zylinder gestört, und die in Wirkverbindung mit diesem Zylinder stehende Ladungsbewegungserzeugung ist nicht vollständig funktionsfähig.

Die zylinderselektive Zuordnung kann aber auch durch die Laufunruhewerte pro Zylinder ermittelt werden. In die Ermittlung des jeweiligen Laufunruhewerts geht die Kurbelwellenbeschleunigung in einem bestimmten Winkelfenster der Kurbelwelle ein, wobei das bestimmte Winkelfenster der Kurbelwelle dem jeweiligen Zylinder zugeordnet ist. Jeder der Laufunruhewerte wird dann jeweils mit einem Sollwert verglichen, der bei erzeugter Ladungsbewegung und dem eingestellten Zündwinkelwert erwartet wird. Auf diese Art und Weise kann festgestellt werden, ob die Laufunruhe, die durch einen Zylinder verursacht wird, höher ist als erwartet. Ist dies der Fall, ist die Ladungsbewegung in diesem Zylinder gestört, und das in Wirkverbindung mit diesem Zylinder stehende Ladungsbewegungselement ist nicht vollständig funktionsfähig.

Wird dies in Schritt 24 festgestellt, wird die Testprozedur durch Schritt 26 verlassen. Vor Schritt 26 kann allerdings z. B. ein Warnsignal erzeugt werden, das eine Person darüber informiert, welches Ladungsbewegungselement voraussichtlich nicht vollständig funktionsfähig ist.

In einigen Fällen kann u. U. auf die beschriebene Art und Weise keine zylinderselektive Zuordnung durchgeführt werden. In einem solchen Fall wird die Testprozedur über Schritt 28 in Schritt 26 verlassen.

Wird in Schritt 18 jedoch festgestellt, daß die Klopfregelung nicht weniger aktiv ist bzw. die Laufunruhe mit den entsprechend eingestellten "frühen" bzw. "späten" Zündwinkeln nicht höher ist als mit angestellten Ladungsbewegungselementen erwartet, kann das Verfahren zu Schritt 14 zurückgeschleift werden, wobei in Schritt 14 der Zündwinkelwert weiter nach früh bzw. spät verstellt wird. Hat der Zündwinkel jedoch bereits einen maximal nach früh bzw. spät verstellten Wert erreicht, wird in Schritt 30 festgestellt, daß die Erzeugung der Ladungsbewegung fehlerfrei verläuft und daher auch die Ladungsbewegungselemente vollständig funktionsfähig sind. Daraufhin wird die Testprozedur in Schritt 26 verlassen.

Bei einer alternativen Ausführungsform des erfindungsgemäßen Verfahrens wird ein Ottomotor mit einem oder mehreren Einlaßventilen für jeweils einen Zylinder untersucht. Bei diesem Ottomotor wird eine Ladungsbewegung im gesamten Motorbetriebsbereich durch eine variable Ventilsteuerung realisiert. Durch die alternative Ausführungsform des erfindungsgemäßen Verfahrens kann überprüft werden, ob die Ventilsteuerung und die Ventile einwandfrei funktionieren. Die Verfahrensschritte laufen dabei analog den oben beschriebenen Schritten ab, wobei in dieser Ausführungsform eventuell andere Zündwinkelwerte eingestellt werden müssen und auch die Sollwerte von den oben verwendeten Sollwerten abweichen können.

Alle beschriebenen Verfahrensschritte können durch eine Motorsteuervorrichtung automatisch durchgeführt werden, wenn diese entsprechend ausgelegt ist.

Weitere Veränderungen, Modifikationen oder Kombinationen der oben beschriebenen Ausführungsformen sind für den Fachmann ebenfalls offensichtlich und fallen damit ebenso unter den Schutzumfang der beigefügten Ansprüche.

## Patentansprüche

1. Verfahren zur Funktionsdiagnose mindestens eines Ladungsbewegungselements in einem Verbrennungsmotor eines Kraftfahrzeugs bei laufendem Verbrennungsmotor, folgende Schritte umfassend:
a) Erzeugen (12) einer Ladungsbewegung durch das mindestens eine Ladungsbewegungsetement;
b) Einstellen (14) mindestens eines Zündwinkels zum Erzeugen eines daraus resultierenden Laufverhaltens des Verbrennungsmotors;
c) Ermitteln (16) einer für das Laufverhalten des Verbrennungsmotors charakteristischen Grösse; und
d) Vergleichen (18) der ermittelten Grösse mit einem Sollwert, um ein mögliches Abweichen festzustellen,
e) bei Übereinstimmen der ermittelten Größe mit dem Sollwert: nach Schritt d) Zurückschleifen zu Schritt b), wobei der mindestens eine Zündwinkel in Richtung "früh" bzw. "spät" auf einen anderen Zündwinkelwert verschoben wird.

2. Verfahren nach Anspruch 1,
**dadurch gekennzeichnet,**
**dass** der Zündwinkel in Schritt b) nach Richtung "früh" auf einen frühen Zündwinkelwert eingestellt wird.

3. Verfahren nach Anspruch 2,
**dadurch gekennzeichnet,**
**dass** die in Schritt c) ermittelte Grösse charakteristisch für die Klopfaktivität ist, die durch zumindest einen bestimmten Zylinder verursacht wird.

4. Verfahren nach Anspruch 3,
**dadurch gekennzeichnet,**
**dass** in die in Schritt c) ermittelte charakteristische Grösse eine Frequenz und/oder eine Amplitude eines Klopfens in einem bestimmten Winkelfenster der Kurbelwelle eingeht, wobei das bestimmte Winkelfenster der Kurbelwelle dem zumindest einen bestimmten Zylinder zugeordnet ist.

5. Verfahren nach Anspruch 1,
**dadurch gekennzeichnet,**
**dass** der Zündwinkel in Schritt b) nach Richtung "spät" auf einen späten Zündwinkel eingestellt wird.

6. Verfahren nach Anspruch 5,
**dadurch gekennzeichnet,**
**dass** die in Schritt c) ermittelte Grösse charakteristisch für die Laufunruhe ist, die durch zumindest einen bestimmten Zylinder verursacht wird.

7. Verfahren nach Anspruch 6,
**dadurch gekennzeichnet,**
**dass** die in Schritt c) ermittelte charakteristische Grösse einer Kurbelwellenbeschleunigung in einem bestimmten Winkelfenster der Kurbelwelle entspricht, wobei das bestimmte Winkelfenster der Kurbelwelle dem zumindest einen bestimmten Zylinder zugeordnet ist.

8. Verfahren nach einem der vorhergehenden Ansprüche,
**dadurch gekennzeichnet,**
**dass** bei Abweichen der ermittelten Grösse von dem Sollwert ein Warnsignal erzeugt wird, das darüber informiert, dass mindestens ein Ladungsbewegungselement oder mindestens ein mit dem zumindest einen bestimmten Zylinder in Wirkverbindung stehendes Ladungsbewegungselement nicht funktionsfähig ist.

9. Verfahren nach einem der vorhergehenden Ansprüche,
**dadurch gekennzeichnet,**
**dass** der frühe bzw. späte Zündwinkelwert oder der andere frühe bzw. späte Zündwinkelwert ein Basiszündwinkel für den Betrieb ohne Ladungsbewegung ist.

10. Verfahren nach einem der vorhergehenden Ansprüche,
**dadurch gekennzeichnet,**
**dass** die in Schritt c) für die Klopfaktivität charakteristische Grösse die Aktivität einer automatischen Klopfregelung ist.

11. Verfahren nach einem der vorgehenden Ansprüche,
**dadurch gekennzeichnet,**
**dass** das mindestens eine Ladungsbewegungselement mindestens eine Ladungsbewegungsklappe umfasst, und dass die mindestens eine Ladungsbewegungsklappe in Schritt a) in eine geschlossene oder in eine nahezu geschlossene Stellung überführt wird.

12. Verfahren nach einem der vorhergehenden Ansprüche,
**dadurch gekennzeichnet,**
**dass** das mindestens eine Ladungsbewegungselement mindestens ein Einlassventil umfasst, das in Schritt a) zum Erzeugen einer Ladungsbewegung aktiviert wird.

13. Verfahren nach einem der vorhergehenden Ansprüche,
**dadurch gekennzeichnet,**
**dass** das Verfahren automatisch oder manuell durchgeführt wird.

14. Verfahren nach Anspruch 13,
**dadurch gekennzeichnet,**
**dass** das Verfahren durch eine Motorsteuervorrichtung durchgeführt wird.

15. Motorsteuervorrichtung, die dazu ausgelegt ist, das Verfahren nach einem der Ansprüche 1 bis 14 automatisch oder manuell durchzuführen.

## Claims

1. Method for performing functional diagnostics on at least one charge movement element in an internal combustion engine of a motor vehicle when the internal combustion engine is running, comprising the following steps:
a) a charge movement is generated (12) by the at least one charge movement element;
b) at least one ignition angle for generating a resulting running behaviour of the internal combustion engine is set (14);
c) a variable which is characteristic of the running behaviour of the internal combustion engine is determined (16); and
d) the determined variable is compared (18) with a setpoint value in order to detect a possible deviation, and
e) when the determined variable corresponds to the setpoint value: looping back to step b) after step d), wherein the at least one ignition angle is shifted in the "advanced" or "retarded" direction to another ignition angle value.

2. Method according to Claim 1,
**characterized**
**in that** the ignition angle is set in step b) in the "advanced" direction to an advanced ignition angle value.

3. Method according to Claim 2,
**characterized**
**in that** the variable which is determined in step c) is characteristic of the knocking activity which is caused by at least one specific cylinder.

4. Method according to Claim 3,
**characterized**
**in that** the characteristic variable which is determined in step c) includes a frequency and/or an amplitude of knocking in a specific angle window of the crankshaft, wherein the specific angle window of the crankshaft is assigned to the at least one specific cylinder.

5. Method according to Claim 1,
**characterized**
**in that** the ignition angle is set in step b) in the "retarded" direction to a retarded ignition angle.

6. Method according to Claim 5,
**characterized**
**in that** the variable which is determined in step c) is characteristic of the running irregularities which are caused by at least one specific cylinder.

7. Method according to Claim 6,
**characterized**
**in that** the characteristic variable which is determined in step c) corresponds to a crankshaft acceleration in a specific angle window of the crankshaft, wherein the specific angle window of the crankshaft is assigned to the at least one specific cylinder.

8. Method according to one of the preceding claims,
**characterized**
**in that**, when the determined variable deviates from the setpoint value, a warning signal is generated which provides information as to whether at least one charge movement element or at least one charge movement element which is operatively connected to the at least one specific cylinder is not functionally capable.

9. Method according to one of the preceding claims,
**characterized**
**in that** the advanced or retarded ignition angle value or the other advanced or retarded ignition angle value is a basic ignition angle for operation without the charge movement.

10. Method according to one of the preceding claims,
**characterized**
**in that** the variable which is characteristic of the knocking activity in step c) is the activity of an automatic knocking control system.

11. Method according to one of the preceding claims,
**characterized**
**in that** the at least one charge movement element comprises at least one charge movement flap, and in that the at least one charge movement flap is transferred into a closed or into a virtually closed position in step a).

12. Method according to one of the preceding claims,
**characterized**
**in that** the at least one charge movement element comprises at least one inlet valve which is activated in step a) in order to generate a charge movement.

13. Method according to one of the preceding claims,
**characterized**
**in that** the method is carried out automatically or manually.

14. Method according to Claim 13,
**characterized**
**in that** the method is carried out by an engine control device.

15. Engine control device which is configured to carry out the method according to one of Claims 1 to 14 automatically or manually.

## Revendications

1. Procédé pour le diagnostic du fonctionnement d'au moins un élément de déplacement de charge dans un moteur à combustion interne d'un véhicule automobile, lorsque le moteur à combustion interne tourne, comprenant les étapes consistant à :
a) produire (12) un déplacement de charge par l'au moins un élément de déplacement de charge ;
b) ajuster (14) au moins un angle d'allumage pour produire un comportement de marche du moteur à combustion interne en résultant ;
c) déterminer (16) une grandeur caractéristique du comportement de marche du moteur à combustion interne ; et
d) comparer (18) la grandeur déterminée à une valeur de consigne, afin d'établir un écart possible,
e) en cas de coïncidence entre la grandeur déterminée et une valeur de consigne : reprendre, après l'étape d) le cycle jusqu'à l'étape b), l'au moins un angle d'allumage étant déplacé dans la direction "d'avance" ou "de retard" à une autre valeur d'angle d'allumage.

2. Procédé selon la revendication 1,
**caractérisé en ce que**
l'angle d'allumage est ajusté dans l'étape b) dans la direction "d'avance" à une valeur d'angle d'allumage avancée.

3. Procédé selon la revendication 2,
**caractérisé en ce que**
la grandeur déterminée dans l'étape c) est caractéristique de l'activité de cognement, qui est provoquée par au moins un cylindre déterminé.

4. Procédé selon la revendication 3,
**caractérisé en ce que**
dans la grandeur caractéristique déterminée dans l'étape c) intervient une fréquence et/ou une amplitude d'un cognement dans une fenêtre angulaire déterminée du vilebrequin, la fenêtre angulaire déterminée du vilebrequin étant associée à l'au moins un cylindre déterminé.

5. Procédé selon la revendication 1,
**caractérisé en ce que**
l'angle d'allumage est ajusté dans l'étape b) dans la direction "de retard" à un angle d'allumage retardé.

6. Procédé selon la revendication 5,
**caractérisé en ce que**
la grandeur déterminée dans l'étape c) est caractéristique d'une irrégularité de fonctionnement qui est provoquée par au moins un cylindre déterminé.

7. Procédé selon la revendication 6,
**caractérisé en ce que**
la grandeur caractéristique déterminée dans l'étape c) correspond à une accélération du vilebrequin dans une fenêtre angulaire déterminée du vilebrequin, la fenêtre angulaire déterminée du vilebrequin étant associée à l'au moins un cylindre déterminé.

8. Procédé selon l'une quelconque des revendications précédentes,
**caractérisé en ce que**
en cas d'écart entre la grandeur déterminée et la valeur de consigne, un signal d'avertissement est produit, lequel informe qu'au moins un élément de déplacement de charge ou au moins un élément de déplacement de charge en liaison fonctionnelle avec l'au moins un cylindre déterminé ne fonctionne pas correctement.

9. Procédé selon l'une quelconque des revendications précédentes,
**caractérisé en ce que**
la valeur d'angle d'allumage avancée ou retardée ou l'autre valeur d'angle d'allumage avancée ou retardée est un angle d'allumage de base pour le fonctionnement sans déplacement de charge.

10. Procédé selon l'une quelconque des revendications précédentes,
**caractérisé en ce que**
la grandeur caractéristique déterminée dans l'étape c) est l'activité d'une régulation automatique du cognement.

11. Procédé selon l'une quelconque des revendications précédentes,
**caractérisé en ce que**
l'au moins un élément de déplacement de charge comprend au moins un clapet de déplacement de charge et **en ce que** l'au moins un clapet de déplacement de charge est transféré dans l'étape a) à une position fermée ou pratiquement fermée.

12. Procédé selon l'une quelconque des revendications précédentes,
**caractérisé en ce que**
l'au moins un élément de déplacement de charge comprend au moins une soupape d'admission qui est activée dans l'étape a) pour produire un déplacement de charge.

13. Procédé selon l'une quelconque des revendications précédentes,
**caractérisé en ce que**
le procédé est mis en oeuvre automatiquement ou manuellement.

14. Procédé selon la revendication 13,
**caractérisé en ce que**
le procédé est mis en oeuvre par un dispositif de commande de moteur.

15. Dispositif de commande de moteur qui est conçu pour mettre en oeuvre le procédé selon l'une quelconque des revendications 1 à 14 automatiquement ou manuellement.
